# FASCICULE DE BREVET EUROPEEN

(11) **EP 0 541 422 B1**
(45) Date de publication et mention de la délivrance du brevet: **17.08.1994**
(21) Numéro de dépôt: 92402929.1
(22) Date de dépôt: 28.10.1992
(51) Int. Cl.: E05B 63/14, B64C 25/26, F02K 1/76

(54) **Dispositif de verrouillage de sécurité à crochet basculant**
Sicherheitsverriegelungsvorrichtung mit umkippbarem Zurückhaltehaken
Security locking system with a tiltable retaining hook

(30) Priorité: 06.11.1991 FR 9113681
(43) Date de publication de la demande: 12.05.1993
(73) Titulaire: MESSIER BUGATTI, F-78140 Velizy Villacoublay (FR)
(72) Inventeur: Rouzaud, Dominique, F-91470 Angervilliers (FR)
(74) Mandataire: Jaunez, Xavier

(56) Documents cités:
- EP-A- 0 265 197
- FR-A- 2 104 408
- US-A- 3 576 337

## Description

La présente invention concerne un dispositif de verrouillage de sécurité à crochet basculant.

On connaît des dispositifs de verrouillage comportant un boîtier, un verrou réalisé sous la forme d'un crochet monté en porte-à-faux sur un axe de basculement porté par ledit boîtier, et un organe de verrouillage escamotable destiné à s'opposer à un mouvement de basculement du crochet lorsque celui-ci est en charge.

Un tel type de dispositif de verrouillage est en particulier utilisé pour verrouiller une porte ou un volet en position fermée.

Il existe certains domaines d'application où le verrouillage doit présenter une sécurité maximale, afin de résister avec un maximum de sécurité à une défaillance du dispositif de verrouillage : il en est notamment ainsi pour le verrouillage des volets d'inversion de poussée des réacteurs d'un avion. Dans ce cas particulier, une défaillance du dispositif de verrouillage, par exemple la rupture du crochet et/ou de son axe de basculement, aurait des conséquences extrêmement graves : l'ouverture intempestive des volets d'inversion de poussée, lors du vol ou dans une phase d'atterrissage avant le roulage au sol, provoquerait en effet une impulsion de freinage pouvant entraîner la perte totale du contrôle de l'avion, et causer ainsi des accidents dramatiques.

L'invention a pour objet de réaliser un dispositif de verrouillage offrant un niveau de sécurité très élevé, notamment en cas de défaillance du verrou à crochet basculant.

L'invention a également pour objet de réaliser un dispositif de verrouillage dont la structure soit simple et compacte, de façon à pouvoir en particulier être utilisé pour le verrouillage des volets d'inversion de poussée des réacteurs d'un avion.

Il s'agit plus particulièrement d'un dispositif de verrouillage comportant un boîtier, un verrou primaire réalisé sous la forme d'un crochet monté en porte-à-faux sur un axe de basculement porté par ledit boîtier pour basculer entre une position d'ouverture, et une position de fermeture dans laquelle ledit crochet supporte un premier organe d'accrochage, et un organe de verrouillage escamotable disposé pour s'opposer au basculement du crochet lorsque ledit crochet est en position de fermeture, par un appui direct d'une partie de verrouillage dudit crochet sur ledit organe de verrouillage, caractérisé en ce qu'il comporte en outre un verrou secondaire adjacent au verrou primaire, et réalisé sous la forme d'un organe monté coulissant dans le boîtier entre une position reculée d'ouverture et une position avancée de fermeture dans laquelle ledit organe coulissant est au voisinage direct d'un second organe d'accrochage associé.

Selon un mode d'exécution préféré, l'organe coulissant présente une portion de verrouillage assurant un blocage mécanique du second organe d'accrochage lorsqu'elle est en contact avec celui-ci, et les moyens d'actionnement du verrou primaire et du verrou secondaire sont agencés de telle façon que le crochet ne puisse basculer dans sa position d'ouverture qu'après le recul de l'organe coulissant. On obtient alors un verrou secondaire qui est auto-bloquant, ce qui est particulièrement avantageux en cas de rupture du crochet et/ou de son axe de basculement.

De préférence aussi, les premier et second organes d'accrochage sont réalisés sous la forme de deux tiges d'accrochage parallèles et adjacentes l'une de l'autre.

Les deux tiges d'accrochage peuvent être disposées dans le prolongement l'une de l'autre. Il est cependant avantageux de prévoir que ces deux tiges d'accrochage sont décalées perpendiculairement à la direction de coulissement de l'organe coulissant : un tel décalage permet en effet de réaliser un organe coulissant dont la section transversale est importante, en vue d'une résistance mécanique élevée de cet organe coulissant, et ce sans avoir à surdimensionner le boîtier du dispositif.

Avantageusement encore, l'organe coulissant est soumis en permanence à l'action d'un ressort associé tendant à rappeler ledit organe vers sa position avancée de fermeture.

De préférence alors, le ressort de rappel agit directement sur l'extrémité d'un poussoir d'actionnement associé à l'organe coulissant. En particulier, le ressort de rappel est logé dans une coupelle fixée extérieurement au boîtier, et la coupelle reçoit également un ressort de rappel agissant sur le poussoir d'actionnement du crochet de telle façon que l'organe de verrouillage escamotable soit en appui contre ledit crochet.

Avantageusement enfin, l'organe coulissant porte un contact coopérant avec un organe de détection associé, fixé au boîtier et servant à détecter la position avancée ou reculée dudit organe coulissant.

D'autres avantages de l'invention apparaîtront plus clairement à la lumière de la description qui va suivre et des dessins annexés, concernant un mode de réalisation particulier, en référence aux figures où :
- la figure 1 est une vue en coupe d'un dispositif de verrouillage conforme à l'invention, ledit dispositif étant représenté en position de verrouillage, avec un crochet et un organe coulissant qui sont tous deux en position de fermeture (la position d'ouverture de ce crochet et de cet organe coulissant étant représentée en traits mixtes) ;
- les figures 2 à 5 sont des coupes respectivement selon II-II, III-III, IV-IV et V-V de la figure 1, permettant de mieux distinguer la structure particulière du crochet et de l'organe coulissant du dispositif de verrouillage ;
- la figure 6 est une vue partielle selon la flèche VI, permettant de mieux distinguer l'agencement des deux tiges d'accrochage, qui sont ici décalées l'une par rapport à l'autre ;
- la figure 7 est une coupe selon VII-VII de la figure 1, permettant de distinguer l'organe de détection associé à l'organe coulissant ;
- la figure 8 est une coupe selon VIII-VIII de la figure 7, permettant de distinguer le crochet et son ressort de rappel qui tend à le maintenir contre l'organe de verrouillage escamotable associé ;
- la figure 9 est une coupe selon IX-IX de la figure 4, illustrant l'organe coulissant dans ses deux positions, et permettant de mieux distinguer la portion de verrouillage prévue ici pour ledit organe coulissant afin qu'il soit auto-bloquant.

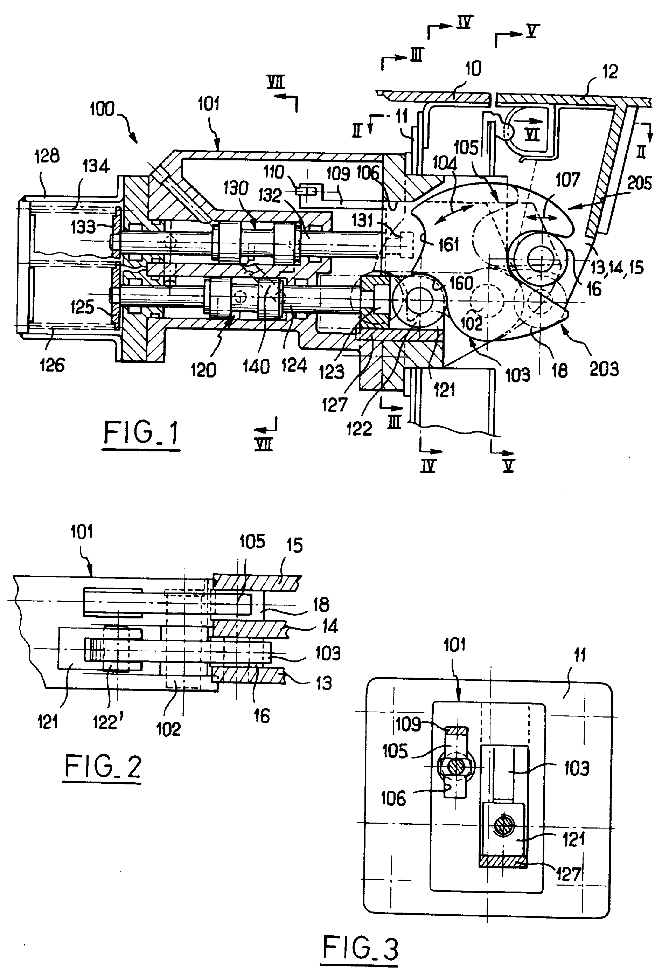

La figure 1 permet de distinguer un dispositif de verrouillage 100 conforme à l'invention, lequel dispositif comporte un boîtier 101 monté par une plaque porteuse 11 sur une structure fixe 10. S'agissant en l'espèce du verrouillage des volets d'inversion de poussée d'un réacteur d'avion, le dispositif de verrouillage 100 sert à verrouiller un volet d'inversion de poussée 12 dont on veut éviter en toute sécurité l'ouverture intempestive.

Le dispositif de verrouillage 100 comporte un verrou primaire 203 réalisé sous la forme d'un crochet 103 monté en porte-à-faux sur un axe de basculement 102 porté par le boîtier 101. Le montage du crochet 103 est dit en porte-à-faux par rapport à son axe de basculement 102 dans la mesure où, en position de fermeture, l'organe d'accrochage associé 16 prenant appui sur le crochet 103 tend à faire basculer celui-ci vers une position d'ouverture dans laquelle l'organe d'accrochage s'échappe dudit crochet. Le crochet 103 peut ainsi basculer, comme schématisé par la flèche 104, entre une position d'ouverture (illustrée ici en traits mixtes), et une position de fermeture dans laquelle ledit crochet supporte ce premier organe d'accrochage 16. Un organe de verrouillage escamotable 122 est par ailleurs disposé dans le boîtier 101 pour s'opposer au basculement du crochet 103 lorsque ledit crochet est en position de fermeture (position illustrée en trait continu sur la figure 1), par un appui direct d'une partie de verrouillage 160 dudit crochet sur ledit organe de verrouillage. L'organe de verrouillage escamotable 122 a ici la forme d'un galet articulé par un axe 122′ sur une chappe 121. Le moyen d'actionnement 120 associé à cet organe de verrouillage escamotable 122 est ici constitué par un poussoir 124 dont une extrémité 123 est reliée par un moyen d'accouplement rapide connu en soi à la chappe 121 supportant le galet 122. L'autre extrémité du poussoir 124 se raccorde à une rondelle d'appui 125 sur laquelle agit un ressort de rappel 126 qui agit ainsi sur le poussoir d'actionnement 124 du crochet de telle façon que l'organe de verrouillage escamotable 122 soit en appui contre ledit crochet. L'appui de l'organe de verrouillage escamotable 122 se fait par l'intermédiaire d'une surface de came 160, de forme incurvée, lorsque le crochet est dans sa position de fermeture, et contre une seconde surface de came 161, également incurvée, lorsque ledit crochet est en position d'ouverture.

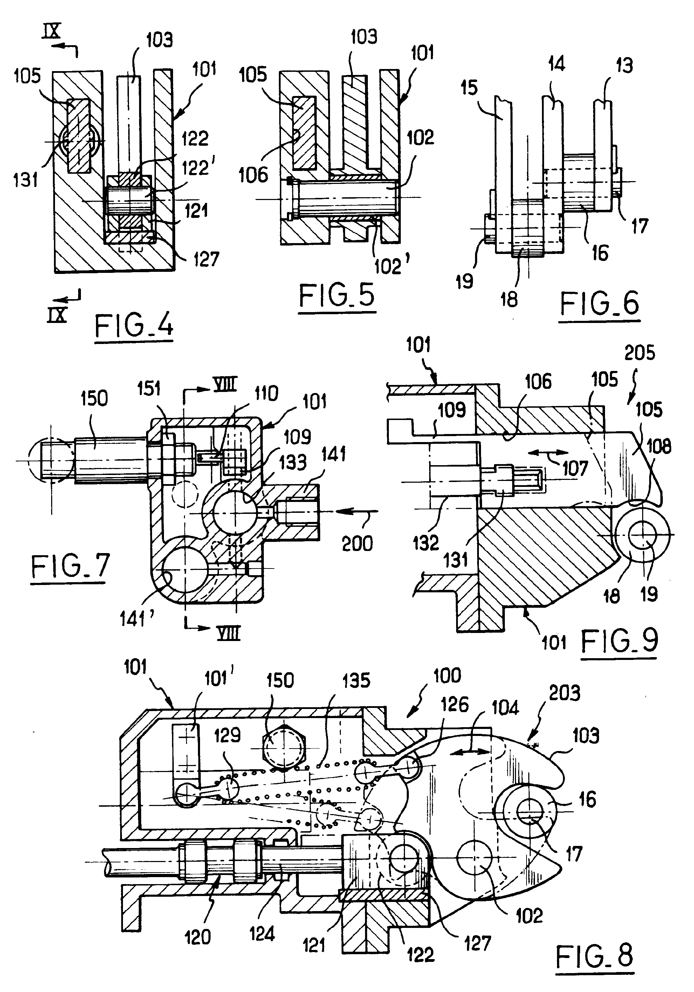

Ainsi que celà est mieux visible sur la figure 8, il est prévu un organe de rappel élastique, qui'est en l'espèce un ressort 135, pour tendre à rappeler le crochet 103 dans sa position d'ouverture, de telle sorte que la surface de came 160 ou la surface de came 161 soit constamment maintenue en appui sur le galet 122. En l'espèce, la liaison du ressort de rappel 135 est assurée par des pions articulés 126 et 129, respectivement montés sur le crochet 103 et sur une patte 101′ solidaire du boîtier 101.

Conformément à une caractéristique essentielle de l'invention, le dispositif de verrouilllage 100 comporte en outre un verrou secondaire 205, adjacent au verrou primaire 203, et réalisé sous la forme d'un organe 105 monté coulissant dans le boîtier 101. L'organe coulissant 105 se déplace ainsi dans un logement associé 106 du boîtier 101, entre une position reculée d'ouverture (illustrée ici en traits mixtes), et une position avancée de fermeture dans laquelle ledit organe coulissant est au voisinage direct d'un second organe d'accrochage 18 associé (voir également la figure 9).

Lorsque l'organe coulissant 105 est en position reculée, il laisse le passage pour le second organe d'accrochage 18 qui lui est associé. Par contre, lorsque l'organe coulissant est en position avancée de fermeture, une portion de son extrémité avant vient au voisinage direct du second organe d'accrochage 18 : il est préférable qu'il n'y ait pas contact direct entre l'organe coulissant 105 et le second organe d'accrochage associé 18 lorsque le dispositif de verrouillage est en position de fermeture. En effet, le verrou secondaire 205 est prévu pour intervenir seulement en cas de besoin, c'est-à-dire en cas de défaillance du verrou primaire 203 à crochet basculant. Ainsi, en cas de rupture du crochet 103 et/ou de son axe de basculement 102, le volet d'inversion de poussée 12 peut effectuer un léger mouvement dans le sens de son ouverture jusqu'à ce que l'organe d'accrochage 18 bute contre l'organe coulissant 105. La présence d'un jeu suffisant permet alors d'utiliser un moyen de détection alertant le pilote d'une défaillance du verrou primaire.

Ainsi que cela est mieux visible sur la coupe de la figure 9, l'organe coulissant 105 présente ici une portion de verrouillage 108 qui est incurvée, de façon à assurer un blocage mécanique du second organe d'accrochage 18 lorsque cette portion de verrouillage est en contact avec ledit organe d'accrochage. On pourrait naturellement prévoir une face de contact rectiligne, mais la présence d'une face incurvée, comme cela est représenté ici, permet d'obtenir un effet d'auto-blocage extrêmement avantageux. En effet, si une rupture survient dans le verrou primaire, et que l'organe d'accrochage 18 contacte alors l'organe coulissant 105, la surface incurvée 108 permet d'interdire le recul dudit organe coulissant. Il est de ce fait avantageux de prévoir alors que les moyens d'actionnement du verrou primaire 203 et du verrou secondaire 205 sont agencés de telle façon que le crochet 103 ne puisse basculer dans sa position d'ouverture qu'après le recul de l'organe coulissant 105. On obtient ainsi un verrou secondaire qui est auto-blocant, ce qui est particulièrement avantageux en cas de rupture du crochet et/ou de l'axe de basculement dudit crochet.

Ainsi que cela est visible sur la figure 1, les moyens d'actionnement 130 associés au verrou secondaire 205 comportent un poussoir 132 dont l'extrémité 131 est reliée par un système de liaison rapide (analogue à celui utilisé pour le raccordement à la chappe portant l'organe de verrouillage escamotable) à l'organe coulissant 105. L'autre extrémité du poussoir 132 est reliée à une rondelle d'appui 133 qui est soumise en permanence à l'action d'un ressort associé 134 tendant à rappeler l'organe coulissant 105 vers sa position avancée de fermeture.

Il est intéressant de noter à ce titre que le ressort de rappel 134, tout comme le ressort de rappel 126 associé au moyen d'actionnement de l'organe de verrouillage escamotable, est logé dans une coupelle commune 128 qui est fixée extérieurement au boîtier 101, de sorte qu'il est possible d'inspecter aisément ces deux resorts de rappel. La coupelle 128 peut être également munie de fenêtres latérales (non visibles ici), afin de pouvoir actionner manuellement les organes du dispositif de verrouillage en cas de défaillance générale.

Lorsque le pilote agit sur le dispositif de verrouillage 100 afin de déverrouiller le volet d'inversion de poussée 12, une impulsion de commande fluidique est envoyée sur le poussoir 132 associé au verrou secondaire 205, lequel poussoir à la forme d'un tiroir coulissant dans un alèsage 133 du boîtier 101, ainsi que cela est visible sur les figures 1 et 7.

La figure 7 permet de distinguer l'embout d'admission 141, l'entrée fluidique étant quant à elle schématisée par la flèche 200. Lorsque le poussoir 132 a suffisamment reculé, un conduit de liaison prévu à cet effet 140 peut assurer la connexion fluidique avec l'alésage 141′ du boîtier 101 dans lequel coulisse le poussoir 124, également réalisé sous la forme d'un tiroir, associé au crochet du verrou primaire. C'est alors qu'intervient la deuxième séquence de déverrouillage, avec le recul de la chappe portant l'organe de verrouillage escamotable 122, ce recul s'accompagnant d'un basculement dans le sens anti-horaire du crochet 103 (sous l'action du ressort de rappel associé 135), et ce jusqu'à ce que ledit crochet atteigne sa position d'ouverture, dans laquelle la surface de came 161 est finalement au contact du galet 122.

Une fois le déverrouillage effectué, l'alimentation fluidique du dispositif est automatiquement coupée, de sorte que les poussoirs 124 et 132 respectivement associés au crochet 103 et à l'organe coulissant 105 sont soumis à la seule action de leur ressort de rappel 126 et 134 : le crochet 103 est alors maintenu en position d'ouverture (surface 161 du crochet contre le galet 122), et l'organe coulissant 105 est ramené dans sa position avancée de fermeture.

A la fermeture du volet, d'une part l'organe d'accrochage 18 contacte la facette inclinée d'extrémité de l'organe coulissant 105 pour l'encliquetage dudit organe d'accrochage, et d'autre part l'organe d'accrochage 16 contacte le crochet 103 et le fait basculer dans sa position de fermeture (surface 160 du crochet contre le galet 122) : le verrouillage est ainsi réalisé automatiquement et de manière purement mécanique.

Les organes d'accrochage sont ici réalisés sous la forme de deux tiges d'accrochage 16, 18, qui sont parallèles et adjacentes l'une à l'autre. La vue de la figure 2 permet ainsi de distinguer la disposition latérale des deux organes d'accrochage 16 et 18 respectivement associés au crochet 103 et à l'organe coulissant 105. Chacune des tiges d'accrochage 16, 18, est tenue par des voiles 13, 14, 15 faisant partie d'un gousset de support relié au volet d'inversion de poussée 12.

On pourrait prévoir que les tiges d'accrochage 16 et 18 sont alignées coaxialement, mais il est cependant avantageux de prévoir que ces deux tiges d'accrochage sont décalées perpendiculairement à la direction de coulissement de l'organe coulissant 105, ainsi que cela est mieux visible sur la vue de la figure 6. Le second organe d'accrochage 18, associé à l'organe coulissant 105 du verrou secondaire est ainsi disposé à un niveau plus bas (sur la figure), ce qui permet de réaliser un organe coulissant dont la section transversale est importante, en vue d'une résistance mécanique élevée de cet organe coulissant, et ce sans avoir à surdimensionner le boîtier du dispositif de verrouillage. Il va de soi que la notion de décalage "perpendiculairement à la direction de coulissement de l'organe de coulissement" doit être comprise comme une référence à cette direction lorsque le volet d'inversion de poussée est verrouillé par le dispositif 100.

Les figures 3 à 5 permettent de bien distinguer les détails de structure du verrou primaire et du verrou secondaire du dispositif de verrouillage selon l'invention.

Il est intéressant de noter aux figures 3 et 4 la présence d'une plaquette 127 sur laquelle glisse la chappe 121 portant l'organe de verrouillage escamotable 122. Cette plaquette pourra éventuellement être réalisée en un matériau à bas coefficient de frottement, afin d'éviter tout risque de grippage dans le coulissement de la chappe (par exemple une matière plastique telle que du polytétrafluorèthylène). La figure 5 permet de mieux distinguer l'axe 102 du crochet 103 et le palier associé 102′.

Les figures 1, 7 et 9 permettent par ailleurs de distinguer une patte 109 ménagée en arrière de l'organe coulissant 105, patte en extrémité de laquelle est prévu un contact 110 coopérant avec un organe de détection associé 150. L'organe de détection 150 est visible sur la coupe de la figure 7, et cet organe est fixé au boîtier 101, par exemple au moyen d'un écrou 151, en étant disposé sur le passage du contact 110 porté par l'organe coulissant 105, de façon à pouvoir détecter la position avancée ou reculée dudit organe coulissant. Cet organe de détection est naturellement raccordé à la centrale de surveillance et de contrôle de l'avion, avec affichage lumineux dans la cabine de pilotage.

Il va de soi que l'invention n'est nullement limitée au mode de réalisation qui vient d'être décrit, mais englobe au contraire toute variante reprenant, avec des moyens équivalents, les caractéristiques essentielles énoncées par les revendications.

## Revendications

1. Dispositif de verrouillage comportant un boîtier (101), un verrou primaire (203) réalisé sous la forme d'un crochet (103) monté en porte-à-faux sur un axe de basculement (102) porté par ledit boîtier pour basculer entre une position d'ouverture, et une position de fermeture dans laquelle ledit crochet supporte un premier organe d'accrochage (16), et un organe de verrouillage escamotable (122) disposé pour s'opposer au basculement du crochet (103) lorsque ledit crochet est en position de fermeture, par un appui direct d'une partie de verrouillage (160) dudit crochet sur ledit organe de verrouillage, caractérisé en ce qu'il comporte en outre un verrou secondaire (205) adjacent au verrou primaire (203), et réalisé sous la forme d'un organe (105) monté coulissant dans le boîtier (101) entre une position reculée d'ouverture et une position avancée de fermeture dans laquelle ledit organe coulissant est au voisinage direct d'un second organe d'accrochage (18) associé.

2. Dispositif de verrouillage selon la revendication 1, caractérisé en ce que l'organe coulissant (105) présente une portion de verrouillage (108) assurant un blocage mécanique du second organe d'accrochage (18) lorsqu'elle est en contact avec celui-ci, et en ce que les moyens d'actionnement (120,130) du verrou primaire (203) et du verrou secondaire (205) sont agencés de telle façon que le crochet (103) ne puisse basculer dans sa position d'ouverture qu'après le recul de l'organe coulissant (105).

3. Dispositif de verrouillage selon la revendication 1 ou la revendication 2, caractérisé en ce que les premier et second organes d'accrochage sont réalisés sous la forme de deux tiges d'accrochage (16,18) parallèles et adjacentes l'une de l'autre.

4. Dispositif de verrouillage selon la revendication 3 caractérisé en ce que les deux tiges d'accrochage (16,18) sont décalées perpendiculairement à la direction de coulissement de l'organe coulissant (105).

5. Dispositif de verrouillage selon l'une des revendications 1 à 4, caractérisé en ce que l'organe coulissant (105) est soumis en permanence à l'action d'un ressort associé (134) tendant à rappeler ledit organe vers sa position avancée de fermeture.

6. Dispositif de verrouillage selon la revendication 5 caractérisé en ce que le ressort de rappel (134) agit directement sur l'extrémité d'un poussoir d'actionnement (132) associé à l'organe coulissant (105).

7. Dispositif de verrouillage selon la revendication 6 caractérisé en ce que le ressort de rappel (134) est logé dans une coupelle (128) fixée extérieurement au boîtier (101).

8. Dispositif de verrouillage selon la revendication 7, caractérisé en ce que la coupelle (128) reçoit également un ressort de rappel (126) agissant sur le poussoir d'actionnement (124) du crochet de telle façon que l'organe de verrouillage escamotable (122) soit en appui contre ledit crochet.

9. Dispositif de verrouillage selon l'une des revendications 1 à 8, caractérisé en ce que l'organe coulissant (105) porte un contact (110) coopérant avec un organe de détection associé (150), fixé au boîtier (101) et servant à détecter la position avancée ou reculée dudit organe coulissant.

## Patentansprüche

1. Verriegelungsvorrichtung mit einem Gehäuse (101), einem Hauptriegel (203), der in Form eines Hakens (103) ausgebildet ist, der vorspringend an einer von dem Gehäuse getragenen Schwenkachse (102) gelagert ist, um zwischen einer Öffnungsstellung und einer Schließstellung verschwenkt zu werden, in welcher der Haken ein erstes Sperrorgan (16) hält, und mit einem einziehbaren Verriegelungsorgan (122), das der Schwenkbewegung des Hakens (103) dadurch entgegenwirkt, daß ein Verriegelungsbereich (160) des Hakens an dem Verriegelungsorgan direkt anliegt, wenn sich der Haken in der Schließstellung befindet, dadurch gekennzeichnet, daß die Vorrichtung ferner einen Hilfsriegel (205) umfaßt, der an den Hauptriegel (203) angrenzt und in Form eines Organs (105) ausgebildet ist, das in dem Gehäuse (101) zwischen einer zurückgeschobenen Öffnungsstellung und einer vorgeschobenen Schließstellung, in welcher das verschiebbare Organ einem zugeordneten zweiten Sperrorgan (18) direkt benachbart ist, verschiebbar gelagert ist.

2. Verriegelungsvorrichtung nach Anspruch 1, dadurch gekennzeichnet, daß das verschiebbare Organ (105) einen Verriegelungsabschnitt (108) hat, der eine mechanische Blockade des zweiten Sperrorgans (18) sicherstellt, wenn er sich mit diesem in Kontakt befindet, und daß die Betätigungsmittel (120, 130) des Hauptriegels (203) und des Hilfsriegels Riegels (205) derart angeordnet sind, daß der Haken (103) nur nach dem Zurückschieben des verschiebbaren Organs (105) in seine Öffnungsstellung schwenken kann.

3. Verriegelungsvorrichtung nach Anspruch 1 oder Anspruch 2, dadurch gekennzeichnet, daß das erste und das zweite Sperrorgan in Form von zwei parallelen und einander benachbarten Sperrstangen (16, 18) vorgesehen sind.

4. Verriegelungsvorrichtung nach Anspruch 3, dadurch gekennzeichnet, daß die beiden Sperrstangen (16, 18) senkrecht zur Verschiebungsrichtung des verschiebbaren Organs (105) versetzt sind.

5. Verriegelungsvorrichtung nach einem der Ansprüche 1 bis 4, dadurch gekennzeichnet, daß das verschiebbare Organ (105) permanent der Wirkung einer zugeordneten Feder (134) ausgesetzt ist, die versucht, das Organ in Richtung auf seine vorgeschobene Schließlage zurückzustellen.

6. Verriegelungsvorrichtung nach Anspruch 5, dadurch gekennzeichnet, daß die Rückstellfeder (134) direkt auf das Ende eines dem verschiebbaren Organ (105) zugeordneten Betätigungsstößels (132) einwirkt.

7. Verriegelungsvorrichtung nach Anspruch 6, dadurch gekennzeichnet, daß die Rückstellfeder (134) in einer Schale (128) aufgenommen ist, die außen an dem Gehäuse (101) befestigt ist.

8. Verriegelungsvorrichtung nach Anspruch 7, dadurch gekennzeichnet, daß die Schale (128) auch eine Rückstellfeder (126) aufnimmt, die auf den Betätigungsstößel (124) des Hakens derart einwirkt, daß das einziehbare Verriegelungsorgan (122) an dem Haken zur Anlage kommt.

9. Verriegelungsvorrichtung nach einem der Ansprüche 1 bis 8, dadurch gekennzeichnet, daß das verschiebbare Organ (105) einen Kontakt (110) aufweist, der mit einem zugeordneten Fühlorgan (150) zusammenwirkt, das an dem Gehäuse (101) befestigt ist und zum Nachweis der vorgeschobenen oder der zurückgeschobenen Position des verschiebbaren Organs dient.

## Claims

1. A locking device comprising a box (101), a primary latch (203) implemented in the form of a hook (103) cantilevered out from a tilt axis (102) carried by said box to enable the hook to tilt between an open position and a closed position in which said hook supports a first catch member (16), and a retractable locking member (122) disposed to oppose tilting of the hook (103) when said hook is in its closed position by a locking portion (160) of said hook bearing directly against said locking member, the locking device being characterized in that it further comprises a secondary latch (205) adjacent to the primary latch (203) and made in the form of a member (105) that is slidably mounted in the box (101) to slide between a retracted, open position and an extended, closed position in which said sliding member is in the direct vicinity of an associated second catch member (18).

2. A locking device according to claim 1, characterized in that the sliding member (105) has a locking portion (108) that mechanically locks the second catch member (18) when it comes into contact therewith, and in that the means (120, 130) for actuating the primary latch (203) and the secondary latch (205) are organized in such a manner that the hook (103) can tilt into its open position only after the sliding member (105) has been retracted.

3. A locking device according to claim 1 or claim 2, characterized in that the first and second catch members are made in the form of two catch rods (16, 18) that are parallel and adjacent to each other.

4. A locking device according to claim 3, characterized in that the two catch rods (16, 18) are offset perpendicularly to the sliding direction of the sliding member (105).

5. A locking device according to any one of claims 1 to 4, characterized in that the sliding member (105) is continuously subjected to the action of an associated spring (134) tending to return said member towards its extended, closed position.

6. A locking device according to claim 5, characterized in that the return spring (134) acts directly on the end of an actuating pusher (132) associated with the sliding member (105).

7. A locking device according to claim 6, characterized in that the return spring (134) is housed in a cover (128) fixed on the outside of the box (101).

8. A locking device according to claim 7, characterized in that the cover (128) also receives a return spring (126) acting on the pusher (124) for actuating the hook in such a manner that the retractable locking member (122) bears against said hook.

9. A locking device according to any one of claims 1 to 8, characterized in that the sliding member (105) carries a contact (110) co-operating with an associated detector member (150) fixed to the box (101) and serving to detect the extended or the retracted position of said sliding member.
